# EUROPÄISCHE PATENTSCHRIFT

(11) **EP 3 243 363 B1**
(45) Veröffentlichungstag und Bekanntmachung des Hinweises auf die Patenterteilung: **03.05.2023**
(21) Anmeldenummer: 15816669.4
(22) Anmeldetag: 18.12.2015
(51) Int. Cl.: H05B 47/115, H05B 45/12, H05B 47/11

(54) **LICHTSYSTEM MIT ANWESENHEITSERKENNUNG VON PERSONEN, UNTER VERWENDUNG VON LICHT MIT UNTERSCHIEDLICHEM SPEKTRUM**
LIGHT SYSTEM FOR DETECTING THE PRESENCE OF INDIVIDUALS BY USING LIGHT HAVING A DIFFERENT SPECTRUM
SYSTÈME D'ÉCLAIRAGE À DÉTECTION DE PRÉSENCE DE PERSONNES PAR UTILISATION DE LUMIÈRE À SPECTRE DIFFÉRENT

(30) Priorität: 08.01.2015 DE 102015200133
(43) Veröffentlichungstag der Anmeldung: 15.11.2017
(73) Patentinhaber: Tridonic GmbH & Co. KG, 6851 Dornbirn (AT)
(72) Erfinder: ONDRISEK, Thomas, 1230 Wien (AT)
(74) Vertreter: Rupp, Christian
(86) Internationale Anmeldenummer: PCT/EP2015/002564
(87) Internationale Veröffentlichungsnummer: WO 2016/110304

(56) Entgegenhaltungen:
- DE-A1-102004 042 724
- US-A1- 2012 262 071
- US-A1- 2012 326 612

## Beschreibung

Die vorliegende Erfindung betrifft ein System und ein Verfahren zur Entdeckung einer Veränderung eines Objektes in einem Raum. Insbesondere umfasst die Erfindung ein selbstlernendes Beleuchtungssystem, das eine Anwesenheit einer Person in einem beleuchteten Bereich detektiert.

Für die Steuerung einer Raumbeleuchtung ebenso wie im Außenbereich außerhalb von Gebäuden ist neben der Verwendung von Schaltern und Dimmern die Verwendung spezieller Bewegungssensoren bekannt. Neben einer vorteilhaften automatischen Bedienung der Leuchtmittel ermöglichen Bewegungssensoren erweiterte Möglichkeiten zur Einsparung von zur Beleuchtung aufzuwendender Energie. Nachteilig ist jedoch, dass für die den auszuleuchtenden Bereich überwachenden Bewegungssensoren zusätzlicher geräteseitiger Aufwand erforderlich ist.

Die DE 20 2010 011 569 U1 offenbart eine Vorrichtung ausgelegt für eine helligkeitsabhängige Beleuchtung. Die gezeigte Vorrichtung umfasst ein Mittel zur Erfassung einer Helligkeit, die in einem von einer oder mehreren Lichtquellen beleuchteten Bereich angeordnet ist, sowie Mittel zur Regelung der Helligkeit mindestens einer der Lichtquellen. Die Regelung der Helligkeit erfolgt dabei zumindest teilweise auf der in dem beleuchteten Bereich erfassten Helligkeit und einem Helligkeitssollwert. Die gezeigte Vorrichtung ermöglicht damit eine dynamische Regelung der Beleuchtung in Abhängigkeit von der Umgebungsbeleuchtung. Das Mittel zum Erfassen der Helligkeit ist dabei im ausgeleuchteten Bereich, oder im mindesten indirekt über Reflexion beleuchteten Bereich angeordnet.

Die DE 10 2009 056 806 A1 zeigt eine Leuchtreklame, die eine zumindest eine Leuchtmittel tragende Platine zeigt. Auf der Platine ist ein Helligkeitssensor angeordnet, der eine Umgebungshelligkeit misst. Eine Steuereinrichtung steuert eine Stromversorgung des mindestens einen Leuchtmittels so an, dass eine von dem Leuchtmittel abgegebene Lichtintensität mit zunehmender Umgebungshelligkeit zunimmt. Damit wird die Leuchtreklame mit einer an die Umgebungshelligkeit angepassten Helligkeit betrieben.

Die Druckschrift US2012/0326612 A1 betrifft ein Licht zum Beleuchten eines nutzbaren Bereichs, insbesondere eines Warenanzeigebereichs, umfassend eine adaptive Beleuchtungseinheit, die eine Anzahl von farbigen Leuchtdioden aufweist, die Licht in den Grundfarben eines Farbsystems emittieren, wobei ein Sensorsystem gerichtet ist, in Richtung des nutzbaren Bereichs, der ein Lichtspektrum erfasst, das von dem nutzbaren Bereich und / oder den auf dem nutzbaren Bereich liegenden Objekten reflektiert wird, und einer Steuereinheit, die mit dem Sensorsystem gekoppelt ist und so ausgelegt ist, dass mindestens eine dominante Farbe aus dem reflektierten Lichtspektrum bestimmt, welches durch das Sensorsystem erfasst wird und die Leuchtdioden zu betätigen, um die mindestens eine dominante Farbe so hervorzuheben, dass sie ein Lichtspektrum einer vorgegebenen Farbtemperatur und / oder -Intensität emittieren, in der der Teil mindestens einer dominanten Farbe erhöht wird.

Die Druckschrift DE 102004042724 betrifft eine Vorrichtung zur Minimierung von Fremdlichteinflüssen bei einer Messeinrichtung, wobei diese Messeinrichtung eine Steuerung, eine Nutzlichtquelle zum Aussenden eines Nutzlichtsignals, mindestens ein Wandlerelement zum Umwandeln einer durch das Nutzlichtsignal und durch Fremdlicht beeinflussbaren optischen Messgrösse in eine elektrische Messgrösse und eine dem Wandlerelement zugeordnete primäre Integrationsvorrichtung mit einem primären Integrationsspeicher zum Integrieren eines aus der elektrischen Messgrösse ableitbaren primären Signals, einem primären Rücksetzmittel zum Rücksetzen des primären Integrationsspeichers in einen Ausgangszustand und einer primären Verarbeitungseinheit umfasst, dadurch gekennzeichnet, dass mindestens eine sekundäre Integrationsvorrichtung mit einem zu beliebigen Zeitpunkten aktivierbaren sekundären Freigabemittel, unabhängig von der primären Integrationsvorrichtung mit dem Wandlerelement verbunden ist und dass die Steuerung zum mehrfachen Aktivieren der Nutzlichtquelle und zum mehrfachen Aktivieren des sekundären Freigabemittels innerhalb eines Messintervalls eingerichtet ist, wobei der primäre Integrationsspeicher Messwerte mit Nutzlichtanteil und ein sekundärer Integrationsspeicher der sekundären Integrationsvorrichtung Messwerte ohne solchen Nutzlichtanteil inkrementiert oder dekrementiert.

Die Druckschrift US 2012/0262071 A1 betrifft Beleuchtungsvorrichtungen und Verfahren zum Erfassen von reflektiertem Licht von lokalen Objekten. Eine Steuerung in einem Beleuchtungsgerät wird verwendet, um eine oder mehrere LEDs innerhalb eines Arbeitszyklus zu aktivieren und zu deaktivieren. Die Steuerung verwendet eine Lichterkennungsvorrichtung, die optisch von den LEDs isoliert ist, um ein Lichtpegel während einer Zeit, in der die LEDs deaktiviert sind, und während einer Zeit, in der die LEDs aktiviert sind, abzutasten. Die Lichtstärke bei Deaktivierung der LEDs zeigt die Umgebungslichtstärke in der Umgebung des Beleuchtungsgeräts an. Der Lichtpegel bei Aktivierung der LEDs ist ein Hinweis auf die Umgebungslichtpegel in Kombination mit dem von den LEDs erzeugten Licht, das auf die Lichterkennungsvorrichtung reflektiert wird. Durch Vergleichen dieser Lichtpegel kann die Steuerung den Lichtpegel bestimmen, der auf das von den LEDs reflektierte Licht zurückzuführen ist. Der Stand der Technik zeigt zwar die Messung einer Helligkeit und den Betrieb eines Leuchtmittels in Abhängigkeit von einer gemessenen Helligkeit, eine Auswertung der gemessenen Helligkeit im Hinblick auf eine in Helligkeitsmessungen enthaltener Information unterbleibt jedoch. Zwar ist im Stand der Technik durchaus die Erfassung eines reflektierten Lichts hinsichtlich seiner Helligkeit erwähnt, doch eine Auswertung dieser Helligkeit unterbleibt.

Es ist eine Aufgabe der vorliegenden Erfindung, eine Veränderung eines reflektierenden Objektes in einem Raum unter möglichst geringem Aufwand zu entdecken.

Diese Aufgabe wird durch ein System mit den Merkmalen des unabhängigen Anspruchs 1, sowie ein Verfahren mit den Merkmalen des nebengeordneten Verfahrensanspruchs gelöst. Die abhängigen Ansprüche beziehen sich auf vorteilhafte Weiterbildungen der vorliegenden Erfindung.

Das erfindungsgemäße System zur Ermittlung einer Veränderung in einem Raum umfasst Leuchtmittel, die geeignet sind, Licht abzugeben, Steuerungsmittel ausgelegt dafür, die Lichtabgabe des Leuchtmittels zu steuern, Messmittel geeignet eine Lichtstärke zu ermitteln und ein
Auswertemittel, dass dafür geeignet ist, die ermittelte Lichtstärke auszuwerten und ein Schaltsignal für die Steuereinrichtung beruhend auf der Auswertung der gemessenen Lichtstärke zu erzeugen. Das erfindungsgemäße System zeichnet sich dadurch aus, dass das Auswertemittel ausgelegt ist, ausgehend von einer ermittelten Lichtstärke zu mindestens einem ersten Zeitpunkt, zu dem das Leuchtmittel kein Licht abgibt und einer ermittelten Lichtstärke zu mindestens einem zweiten Zeitpunkt, zu dem das Leuchtmittel Licht abgibt, eine Veränderung eines Objektes im Raum zu erkennen.

Die erfindungsgemäße Ausgestaltung ermöglicht es, zu mindestens dem ersten Zeitpunkt zu dem das Leuchtmittel kein Licht abgibt, eine Lichtstärke (Helligkeit)zu ermitteln, die eine Referenz für die Bestimmung der Änderung der Reflexionsverhältnisse in einem von dem Leuchtmittel beleuchteten Raum bildet. Die zu dem ersten Zeitpunkt ermittelte Lichtstärke wird ausschließlich durch Anteile des Lichts bestimmt, die nicht durch das Leuchtmittel verursacht sind. Die zu dem ersten Zeitpunkt durch das Messmittel ermittelte Lichtstärke ist insbesondere durch Umgebungslicht, beispielsweise natürliches Umgebungslicht und durch andere Lichtquellen als das Leuchtmittel des erfindungsgemäßen Systems Umgebungslicht erzeugt.

Die Bestimmung einer Veränderung eines Objektes in dem Raum erfolgt nun durch Detektion einer Veränderung der Reflexionsverhältnisse in dem Raum mittels einer ermittelten Lichtstärke zu mindestens einem zweiten Zeitpunkt, zu dem das Leuchtmittel Licht abgibt, eine Veränderung eines Objektes im Raum zu erkennen. Beispielsweise kann eine solche Änderung der Reflexionsverhältnisse in dem beleuchteten Raum durch eine Bewegung einer Person indem Raum verursacht werden. Damit ermöglicht das erfindungsgemäße System in einfacher Weise, das Eintreten einer Person in den zu beleuchtenden Raum erkennen.

Im Gegensatz zum Stand der Technik, in dem die Aufgabe Detektion von Personen spezialisierten zusätzlichen Detektionsvorrichtungen, wie beispielsweise Bewegungsmeldern zugeordnet wird, erfolgt dies erfindungsgemäß durch eine geeignete Auswertung der durch das Leuchtmittel des Systems abgegebene und reflektierte Licht und kann daher mittels einer oder mehrerer Fotosensoren einfach erfasst werden. Es ist daher insbesondere vorteilhaft, wenn das erfindungsgemäße System Bestandteil eines Beleuchtungssystems ist, wobei das Messmittel, z.B. Fotodioden, die dem Leuchtmittel zugeordnet und innerhalb eines Gehäuses oder an diesem des Leuchtmittels angeordnet ist. Die integrierte Ausführung des Beleuchtungssystems mit einem zugleich zur Ausleuchtung des Raums bestimmten Leuchtmittel ermöglicht eine besonders einfache Herstellung und Montage des erfindungsgemäßen Beleuchtungssystems.

Eine vorteilhafte Ausführung des Systems zeichnet sich dadurch aus, dass das Steuerungsmittel das Messmittel steuert. Insbesondere kann das Steuerungsmittel dafür ausgelegt sein, in Abhängigkeit von der erkannten Veränderung des Objektes einen, Lichtpegel des von dem Leuchtmittel abgegebenen Lichts zu ändern. Somit kann augehend von einer erkannten Anwesenheit einer Person ein Lichtpegel der Beleuchtung des Raums durch das Leuchtmittel ausgelöst werden.

Weiter ist es vorteilhaft, wenn das Auswertemittel ausgelegt ist, aus einem Verhältnis der ermittelten Lichtstärke zu dem mindestens einen ersten Zeitpunkt, und einer Lichtstärke zu dem mindestens einen zweiten Zeitpunkt, eine Änderung eines von dem im Raum befindlichen Objekt reflektierten Lichtanteils zu bestimmen, um eine Anwesenheit einer Person in dem Raum zu erkennen.

In einer bevorzugten Ausführungsform des erfindungsgemäßen Systems ist das Auswertemittel ausgelegt, mittels Lernen aus der ermittelten Lichtstärke zu dem mindestens einen ersten Zeitpunkt, und einer Lichtstärke zu dem mindestens einen zweiten Zeitpunkt, eine Anwesenheit einer Person in dem Raum zu entscheiden. Das Lernen oder Trainieren des Systems kann beispielsweise in Zusammenhang mit einer Installation des Systems erfolgen. Durch Trainieren des Systems ist es weiter möglich, die Veränderung einer Position einer im Raum befindlichen Person von einer Lichtsituation zu unterscheiden. Eine Veränderung einer Lichtsituation ist beispielsweise durch Herausziehen eines weißen Blatt Papiers aus einem Bürotisch zu bewirken.

Das Trainieren der Erkennung einer Veränderung eines Objektes und die Relevanz einer ermittelten Änderung der Reflexionsverhältnisse, kann auf der Grundlage eines neuronalen Netzes ausgeführt werden.

In dem erfindungsgemäßen System umfasst Licht zu dem mindestens einen ersten Zeitpunkt Umgebungslicht und das Licht besteht zu dem mindestens einen zweiten Zeitpunkt aus Umgebungslicht und reflektiertes Licht.

Weiterhin wird das System ein Messmittel umfassen, das einen Tageslichtsensor (ALS - Ambient Light Source) enthält.

Das Steuerungsmittel ist eingerichtet, einen Burstbetrieb des Leuchtmittels zu beginnen, wenn der Tageslichtsensor eine Lichtstärke unterhalb einer Tageslichtschwelle ermittelt und die Leuchtmittel inaktiv geschaltet sind. Der Burstbetrieb des Leuchtmittels ist kurzzeitig, um während dieses Burstbetriebes die Reflexionseigenschaften des Raumes in regelmäßigen Abständen zu überprüfen.

Es ist vorteilhaft wenn das System ein Auswertemittel umfasst, das aus einer ermittelten Lichtstärke zu dem mindestens einen zweiten Zeitpunkt, ein Anteil des ermittelten Lichts bestimmt, der durch weitere Leuchtmittel mit definierter Betriebsfrequenz in dem Raum erzeugt wird. Das Leuchtmittel kann mindestens ein Leuchtelement und mindestens ein weiteres Leuchtelement umfassen, wobei das mindestens eine Leuchtelement und das mindestens eine weitere Leuchtelement jeweils Licht in einem voneinander unterscheidbaren Spektrum aussenden. Wenn das Auswertemittel jeweils die ermittelte Lichtstärke in den voneinander unterscheidbaren Spektren auswertet, so kann durch die dadurch erfolgte spektrumsabhängige Reflexionsmessung eine Erkennung einer Veränderung eines Objektes in dem Raum oder die Detektion einer Person mit weiter verbesserter Zuverlässigkeit ausgeführt werden.

Die technische Aufgabenstellung wird erfindungsgemäß auch durch ein Verfahren zur Ermittlung einer Veränderung in einem Raum gelöst. Das Verfahren verwendet dazu ein System, umfassend, Leuchtmittel, die Licht abgeben, Steuerungsmittel, die die Lichtabgabe des Leuchtmittels steuern, Messmittel die eine Lichtstärke ermitteln, und Auswertemittel, die die ermittelte Lichtstärke auswerten und ein Schaltsignal für die Steuereinrichtung (3) beruhend auf der Auswertung der Lichtstärke erzeugen. Das erfindungsgemäße Verfahren zeichnet sich dadurch aus, dass zunächst in einem ersten Schritt des Messens eine Lichtstärke zu mindestens einem ersten Zeitpunkt ermittelt wird, zu dem das Leuchtmittel kein Licht abgibt, und in einem zweiten Schritt eine Lichtstärke zu mindestens einem zweiten Zeitpunkt, zu dem das Leuchtmittel Licht abgibt ermittelt. Anschließend wird in einem Auswertungsschritt ausgehend von der ermittelte Lichtstärke zu dem mindestens einem ersten Zeitpunkt, und der Lichtstärke zu dem mindestens einen zweiten Zeitpunkt, eine Veränderung eines Objektes im Raum detektiert.

In vorteilhafter Weise wird die technische Aufgabe durch ein Computerprogramm mit Programmcode-Mitteln gelöst, das alle Schritte gemäß dem Verfahren durchführen zu können, wenn das Programm auf einem Computer oder einem digitalen Signalprozessor ausgeführt wird.

Nachfolgend wird die Erfindung anhand der beiliegenden Zeichnung näher erläutert. Es zeigt
- Fig. 1: einen Überblick über ein Ausführungsbeispiel eines selbstlernenden Systems zur Raumbeleuchtung gemäß der vorliegenden Erfindung,
- Fig. 2: Ablaufdiagramme zu einem Ausführungsbeispiel eines Systems zur Raumbeleuchtung gemäß der vorliegenden Erfindung,
- Fig. 3: ein Zeitdiagramm zu einem Ausführungsbeispiel eines selbstlernenden Systems zur Raumbeleuchtung gemäß der vorliegenden Erfindung
- Fig. 4: einen Überblick über den Aufbau eines Systems zur Raumbeleuchtung gemäß der vorliegenden Erfindung mittels eines Blockschaltplans,
- Fig. 5: einen Ablaufplan eines Verfahrens zur Raumbeleuchtung gemäß der vorliegenden Erfindung

In den Figuren sind Elemente mit gleicher Funktion mit gleichen Bezugszeichen bezeichnet.

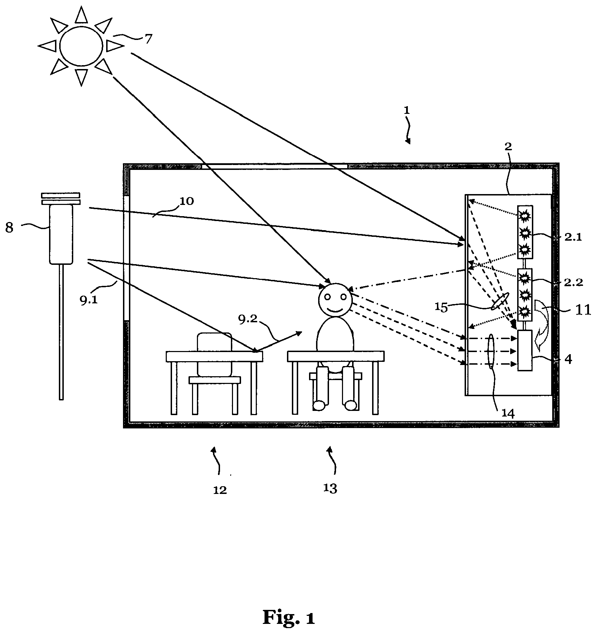

Die Fig. 1 gibt einen Überblick über ein Ausführungsbeispiel eines Systems zur Raumbeleuchtung gemäß der Erfindung. Das dargestellte System umfasst eine in einem Raum 1 angeordnete Leuchte 2. Die Leuchte 2 umfasst im dargestellten Beispiel zum einen mehrere Leuchtelemente 2.1, 2.2 und zum anderen ein Messmittel 4. Die Leuchtmittel 2.1, 2.2 können beispielsweise LEDs oder LED-Module mit einer Vielzahl einzelner LEDs umfassen und in einem gemeinsamen Gehäuse mit den entsprechenden Ansteuerschaltungen sowie dem Messmittel 4 angeordnet sein. Das Messmittel 4 ist in einem Ausführungsbeispiel eine Fotodiode, die der Leuchte 2 zugeordnet ist. Die Leuchte kann eine Leuchte 2 unter mehreren oder die alleinige Leuchte 2 sein, die den Raum 1 mit Kunstlicht ausleuchtet.

Es ist insbesondere vorteilhaft, wenn das Messmittel 4 (Fotodiode, Fotosensor) mit den zugeordneten Auswerteschaltungen Bestandteil einer Vorschalt- und Steuereinheit für die Leuchtmittel 2.1, 2.2 ist und beispielsweise integriert mit dieser ausgeführt ist. Das Messmittel 4 misst das einfallende Licht und erzeugt in Abhängigkeit von der Stärke des einfallenden Lichts ein Ausgangssignal. Ist das Messelement 4 als Fotodiode ausgebildet, so wird durch das einfallende Licht ein Fotostrom in Abhängigkeit von der Stärke des einfallenden Lichts erzeugt.

Weitere Quellen, die den Raum 1 mit Licht versorgen, stellen natürliche Lichtquellen 7 wie beispielsweise die Sonne und künstliche Lichtquellen 8 wie beispielsweise eine Straßenbeleuchtung dar. Diese natürlichen und zusätzlichen künstlichen Lichtquellen 7, 8 können ebenso innerhalb wie außerhalb des Raumes 1 angeordnet sein. Die künstlichen Lichtquellen 8 umfassen ebenso weitere Leuchtmittel, die Licht ausstrahlen.

Die gezeigten Lichtquellen 4, 7 und 8 erzeugen einerseits Licht 10, das direkt auf den Fotodiode 4 trifft, andererseits reflektiertes Licht 9.1, 9.2, das durch Gegenstände im Raum reflektiert wird und als reflektiertes Licht 9.2. auf die Fotodiode fallen kann.

Es kann auch eine weitere einfallende Lichtkomponente 11 durch die Leuchtmittel 2.1, 2.2 geben, die in der Fotodiode einen entsprechenden Fotostrom erzeugt und damit als Licht detektiert wird.

Im Weiteren wird von Licht und der Reflexion gesprochen. Licht wird dabei als die Lichtstrahlung in einem Spektrum, wie es von üblichen Beleuchtungskörpern emittiert wird, verstanden. Reflexion wird im Folgenden als die Reflexion von Licht, also elektromagnetischer Strahlung im optischen Spektralbereich, an Grenzflächen verstanden.

Ein im Raum 1 befindliches Objekt reflektiert zumindest teilweise einfallendes Licht unabhängig von der Quelle des Lichts. Eine Objekt oder Gegenstand im Raum kann beispielsweise ein Arbeitsplatz 12 sein. Die Stärke und Richtung des reflektierten Lichts wird von der Form und der Oberfläche des Objektes und von der Lichtquelle abhängig sein. Eine Person 13 an einem Arbeitplatz wird daher ein anderes Reflexionsverhalten hinsichtlich einfallenden Lichts zeigen, als dies für den unbesetzten Arbeitsplatz 12 gilt. Der Raum 1 zeichnet sich daher durch ein charakteristisches Reflexionsmuster in Abhängigkeit von der Anzahl, der Beschaffenheit der Objekte in dem Raum 1 aus.

Eine Veränderung eines Objektes von einem ersten Zeitpunkt t1 zu einem zweiten Zeitpunkt t2 wird zu einer Änderung der Reflexionseigenschaften des Raumes 1 führen. Eine solche Veränderung eines Objektes ist beispielsweise eine Bewegung einer Person in dem Raum. Im Zusammenhang mit Beleuchtungsystemen ist insbesondere der Eintritt oder das Verlassen eines Raumes durch eine Person von Bedeutung und äußert sich in einer Änderung der Lichtreflexioneigenschaften des Raumes 1. Eine Veränderung eines Objektes in dem Raum 1 ist daher mit einer Änderung des Reflexionsmusters verbunden.

Das an dem Messmittel einfallende und detektierte Licht umfasst dabei einerseits nutzbare Lichtkomponenten 14, das über Reflexionen an Grenzflächen von Objekten im Raum 1 das Messmittel 4 erreicht. Andererseits umfasst das detektierte Licht weitere parasitäre Lichtkomponenten 15, die direkt von den einzelnen Lichtquellen, wie beispielsweise natürliche Lichtquellen 7, künstliche Lichtquellen 8 und auch die Leuchtmittel 2.1, 2.2 selbst stammen und keine Reflexion an Objekten im Raum 1 erfolgte. Während die nutzbaren Lichtkomponenten 14 in ihrer Intensität und ihrer spektralen Verteilung Information über Objekte im Raum 1 enthalten, tragen die parasitäre Lichtkomponenten 15 keine solche Information über Objekte im Raum. Um den Einfluss der Leuchtmittel 2.1, 2.2 auszuschließen, können diese vom Messmittel abgeschattet werden.

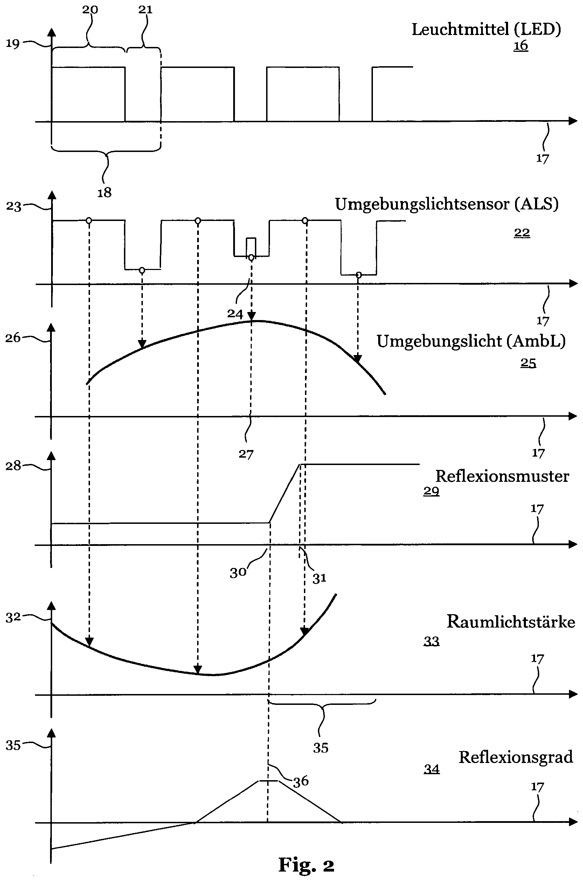

Anhand der Fig. 2 wird anhand eines Ablaufdiagramms ein Ausführungsbeispiel eines selbstlernenden Systems zur Raumbeleuchtung gemäß der vorliegenden Erfindung erläutert. Dabei wird ohne Einschränkung der Allgemeinheit davon ausgegangen, dass die Leuchtmittel 2.1, 2.2 als LEDs ausgeführt sind. Ebenfalls wird angenommen, dass die LEDs über Pulsweitenmodulation gesteuert werden (PWM-Betrieb). Wird die Ein- und Ausschaltdauer der Pulse geeignet gewählt, nimmt das menschliche Auge nur die durchschnittliche Leuchtstärke der LED wahr. Somit kann die Stärke des durch die LED abgegebenen Lichts mit dem Tastverhältnis einer Steuerspannung linear gesteuert werden kann. Die Tastfrequenz ist dafür ausreichend hoch anzusetzen (beispielsweise 10 kHz). In Fig. 2 ist der zeitliche Verlauf 16 der Lichtabgabe der Leuchtmittel 2.1, 2.2 dargestellt. Auf der horizontalen Achse 17 ist die Zeit t aufgetragen. Auf der vertikalen Achse 19 ist die Stärke der Lichtabgabe der Leuchtmittel 2.1, 2.2 (LED) dargestellt. In einem ersten Zeitabschnitt 20 gibt die LED Licht einer bestimmten Stärke ab. In einem zweiten Zeitabschnitt 21 ist die LED hingegen ausgeschaltet und gibt kein Licht ab. Dieser Vorgang wiederholt sie für jede Periode 18, wobei die Zeitabschnitte 21, 22 eine Periode 18 bilden.

Weiter ist in Fig. 2 ist der zeitliche Verlauf 17 der Messung der gemessenen Lichtstärke des Umgebungslichtsensors 4 dargestellt. Auf der horizontalen Achse 17 ist die Zeit t aufgetragen. Auf der vertikalen Achse 23 ist die ermittelte Lichtstärke dargestellt. In einem ersten Zeitabschnitt 20 gibt die LED Licht einer bestimmten Stärke ab. In einem zweiten Zeitabschnitt 21 ist die LED hingegen ausgeschaltet und gibt kein Licht ab. Während des zweiten Zeitabschnitts 21 wird daher der Umgebungslichtsensor 4 lediglich Umgebungslicht messen. In Fig. 2 ist in der zweiten Periode 18 durch den Umgebungslichtsensor 4 eine Störung durch einfallendes Licht 24 gemessen. Dieses einfallende Licht wird beispielsweise durch ein weiteres, im Raum 1 befindliches Leuchtmittel emittiert.

Der zeitliche Verlauf des Umgebungslichts (AmbL) 25 ist als zeitkontinuierlicher Verlauf 25 dargestellt. Dabei ist in Richtung der Ordinate 26 die zu diskreten Zeitpunkten durch den Umgebungslichtsensor 4 ermittelte Lichtstärke aufgetragen. Das Umgebungslicht wird erfindungsgemäß zu ersten Zeitpunkten gemessen, zu denen das Leuchtmittel 2 kein Licht emittiert, also in dem zweiten Zeitabschnitten 21 liegen. Für einen Zeitpunkt 27 wird dabei eine Störung versursacht durch ein weiteres Leuchmittel in Form einer Zurückweisung berücksichtigt.

Weiter ist in Fig. 2 der zeitliche Verlauf 29 eines Reflexionsmaßes dargestellt. Dabei ist in Richtung der Ordinate 28 eine Kenngröße für den zum jeweiligen Zeitpunkt repräsentativen Wert für eine Lichtreflexion für den Raum 1 dargestellt. Zu einem Zeitpunkt t1 30 beginnt im zeitlichen Verlauf des Reflexionsmusters des Raums 1 ein linearer Anstieg von einem ersten niedrigeren Reflexionsmaß auf ein zweites höheres Reflexionsmaß. Ab einem Zeitpunkt t2 31 ist der höhere Wert für das Reflexionsmaß des Raums 1 wieder konstant.

Fig. 2 zeigt darunter einen ermittelten zeitlichen Verlauf 33 der Raumlichtstärke 1 dargestellt. Dabei ist in Richtung der Ordinate 32 eine Kenngröße für den zum jeweiligen Zeitpunkt repräsentativen Wert für die ermittelte Lichtstärke für den Raum 1 dargestellt. Dabei wird die ermittelte Lichtstärke jeweils während der Einschaltphase der Leuchtmittel 2 durch den Umgebungslichtsensor 4 ermittelt. In einem zeitlichen Abschnitt 35 ist der Verlauf der Raumlichtstärke 33 aufgrund eines erhöhten Anteils reflektierten Lichts höher als beispielsweise die ermittelte Raumlichtstärke zu Beginn des dargestellten zeitlichen Verlaufs 33 der Raumlichtstärke.

Der mittels des erfinderischen Verfahrens ermittelte zeitliche Verlauf 34 der Änderung des Reflexionsgrads (Verhältnis zwischen reflektierter und einfallender Intensität) im Raum 1 ist in dem untersten Diagramm der Fig. 2 gezeigt. Dabei ist in Richtung der Ordinate 35 ein Maß für die Änderung des Reflexionsmaßes des Raums 1, ermittelt unter Berücksichtigung der ermittelten Lichtstärke jeweils für einen Zeitpunkt während der Einschaltphase der Leuchtmittel 2.1, 2.2 durch den Umgebungslichtsensor 4 ermittelt und der ermittelten Lichtstärke jeweils für einen Zeitpunkt während der Ausschaltphase der Leuchtmittel 2.1, 2.2, wie sie durch den Umgebungslichtsensor 4 ermittelt wird.

Die ermittelte Lichtstärke jeweils für einen ersten Zeitpunkt während der Ausschaltphase der Leuchtmittel 2, dient dabei als Referenz für die Ermittlung der Änderung der Reflexionsmaßes des Raums 1 aus den jeweils unter Berücksichtigung der für zweite Zeitpunkte während der Einschaltphase der Leuchtmittel 2.1, 2.2 durch den Umgebungslichtsensor 4 ermittelten Lichtstärken.

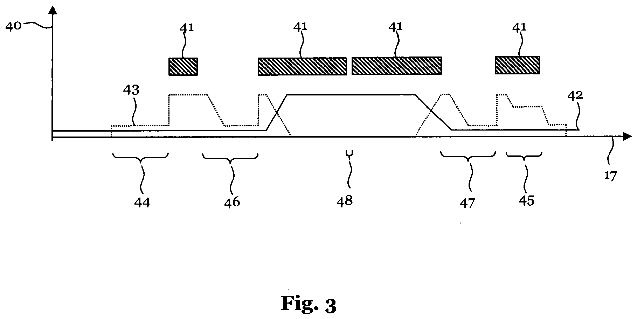

In Fig. 3 ist ein typischer Verlauf der Lichtstärke über einen Tag dargestellt. Auf der Abszisse 17 ist die Zeit aufgetragen. In Richtung der Ordinate 36 ist jeweils die Lichtstärke 40 aufgetragen. In Fig. 3 ist zusätzlich die Anwesenheit einer oder mehrerer Personen in dem betrachteten Raum für die dargestellte Zeit durch entsprechende Balken 41 gezeigt.

Die durchgezogene Linie in Fig. 3 zeigt den Verlauf 42 des Umgebungslichts 42 über den Verlauf eines Tages. Das Umgebungslicht wird im dargestellten Verlauf wesentlich durch natürliches Umgebungslicht geprägt, d. h. ist für die Zeit der Dunkelheit konstant gering, steigt beispielsweise linear auf einen Wert des Umgebungslichts, der für den Tag kennzeichnend ist an. In dem dargestellten Verlauf wird für den die Dämmerung wiederum ein linearer Abfall der Lichtstärke des Umgebungslichts bis zu dem für die Nacht charakteristischen Wert des Umgebungslichts angenommen. Der dargestellte Verlauf des Umgebungslichts ist eine stark vereinfachte Darstellung. Insbesondere berücksichtigen sowohl die Annahme eines linearen Übergangs und jeweils konstante Umgebungslichtstärken für Tag und Nacht weitere Lichtquellen wie Straßenbeleuchtung, Fahrzeuge, Abschattungen durch Objekte, Bewegung von Lichtquellen wie beispielsweise Sonne und Mond nicht.

Die gestrichelte Kurve 43 gibt den Verlauf der Lichtstärke (Lichtintensität) des Leuchtmittels 2 über den Tag wieder. Die Lichtstärke des Leuchtmittels über den Tag wird dabei von einer Steuereinheit einerseits zeitabhängig gesteuert. Eine zeitabhängige Steuerung erfolgt hierbei beispielsweise über einen Zeitgeber (Timer). So wird im dargestellten Beispiel zu Beginn des Intervalls 44 durch den Timer ein Signal gegeben, so dass eine Steuereinheit die Leuchtmittel 2.1, 2.2 so steuert, dass eine voreingestellte minimale Lichtstärke durch die Leuchtmittel 2.1, 2.2 ausgestrahlt wird. Ebenso wird für das Intervall 45 angenommen, dass aufgrund eines Timersignals zu einem voreinstellbaren Zeitpunkt die abzugebende Lichtstärke der Leuchtmittel 2.1, 2.2 reduziert wird. Dabei erfolgt die Reduktion der Lichtstärke im Intervall 45 auf einen gegenüber der Tageslichtstärke reduzierten Wert, der andererseits deutlich über dem Wert der Umgebungslichtstärke zu diesem Zeitpunkt liegt, solange sich Personen in dem betrachteten Raum 1 aufhalten.

Durch das erfindungsgemäße Beleuchtungssystem kann eine Veränderung einer oder mehrerer Personen im Raum 1 detektiert und damit die die Beleuchtungsstärke entsprechend der Situation im Raum angepasst werden. Daher wird nach Verlassen des Raumes durch die letzte Person die Beleuchtungsstärke weiter reduziert bis die voreingestellte minimale Beleuchtungsstärke erreicht ist. Für das Intervall 46 wird eine dem Intervall 45 vergleichbarer Ablauf gezeigt. Sowie die Auswertung der aufgenommenen Reflexionsmuster erkennen lässt, dass sich keine Personen im Raum 1 aufhalten, wird die Beleuchtungsstärke des Leuchtmittels 4 reduziert, obwohl die geringe Umgebungslichtstärke eine Beleuchtung des Raumes 1 mit dem Leuchtmittel 4 erforderlich machen würde. Eine entsprechende Situation ist in dem Intervall 47 zu erkennen. Es wird auch deutlich, dass die Steuerung der Leuchtmittel 2.1, 2.2 dergestalt erfolgen kann, dass mit der Entscheidung, dass die letzte Person den Raum verlassen hat, die Leuchtmittel 2.1, 2.2 noch für eine bestimmte Zeitspanne Licht abgibt.

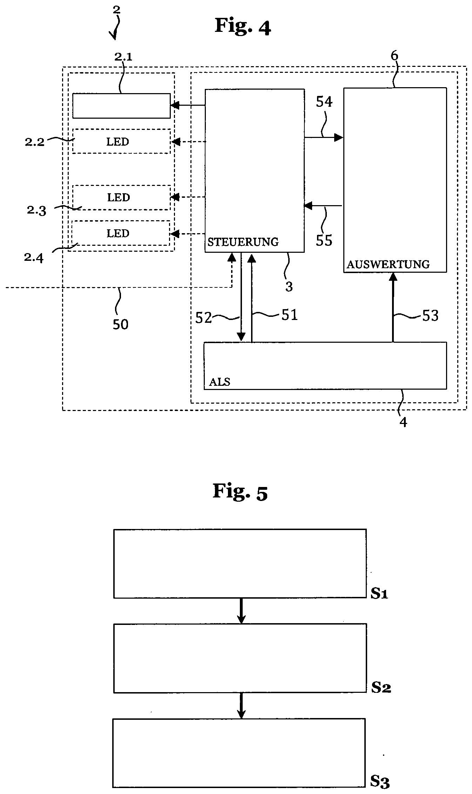

Aus dem Verlauf 43 der von den Leuchtmitteln 2.1, 2.2 abgegebenen Lichtstärke ist erkennbar, dass durch eine Verknüpfung einer Bewegungserkennung gemäß der vorliegenden Erfindung eine deutliche Reduzierung der aufgenommenen Energie durch die Leuchtmittel 2.1, 2.2 zu erreichen ist. Insbesondere in Verbindung mit einer zeitabhängigen Steuerung und einem Umgebungslichtsensor 4 lassen sich Einsparungen im Energieverbrauch erzielen. Besonders vorteilhaft ist ein Aufbau des Beleuchtungssystems in integrierter Form, d. h. das Beleuchtungssystem umfasst räumlich zusammengefasst Leuchtmittel 2.1, 2.2, Messmittel 4, ein Steuermittel 3 und ein Auswertemittel 5. Ein derartiger integrierter Aufbau ist in Fig. 4 gezeigt. Ein solcher Aufbau ergibt eine vollständig autark operierende, autonome Leuchte 2 mit vorteilhaft geringer Energieaufnahme und zugleich geringem Aufwand für die Verknüpfung mit weiteren Leuchtmitteln zur Synchronisation und externen Steuereinheiten zur Steuerung der Lichtabgabe entsprechend einem mittels zusätzlichen Bewegungsmeldern festgestellten Bedarf.

In Fig. 4 ist ein Steuermittel 3 gezeigt, dass die Lichtabgabe eines Leuchtmittel 2.1, 2.2 steuert. Die Leuchte 2 kann eines mehrere Leuchtmittel 2.1, 2.2, 2.3, 2.4,... umfassen. Ein Leuchtmittel ist beispielsweise eine LED oder ein LED-Modul umfassend eine Mehrzahl von LEDs. Die Leuchte 2 kann jede Form von Licht abgebenden Einheiten statt oder zusätzlich zu LEDs umfassen. Weiter umfasst das System zur Ermittlung einer Veränderung in einem Raum 1 ein Messmittel 4. Das Messmittel 4 kann beispielsweise einen Umgebungslichtsensor ALS enthalten oder eine Gruppe von Sensoren, die einfallendes Licht aufnehmen und eine der einfallendes Lichtstärke entsprechendes Messsignal 51 an das Steuermittel 3 ausgeben. Zugleich ist das Steuermittel 3 eingerichtet, das Messmittel 4 zu steuern. Eine solche Steuerung des Messmittels 4 ist beispielsweise die zeitliche Synchronisation der einzelnen Messungen, die das Messmittel 4 ausführt und/oder die Ausgabe der einzelnen Lichtstärkemessungen über ein Messsynchronisationssignal 52 zu steuern.

Das Steuermittel 3 kann darüber hinaus über eine externe Schnittstelle ein Steuersignal 50 empfangen. Das Steuersignal 50 kann beispielsweise Zeitinformation eines externen Zeitgebers (Timer) oder externe Information über einen durch das Leuchtmittel 2 abzugebenden Lichtpegel erhalten.

Ein weiteres Signal 53 mit durch das Messmittel 53 erhaltenen Messwerten der Lichtstärke wird dem Auswertemittel 6 von dem Messmittel 3 übermittelt. Die Auswertung der Messwerte erfolgt in dem Auswertemittel 6 unter Einbezug eines Auswertesteuersignals 54. Das Auswertesteuersignal 54 kann beispielsweise Daten zu den Messzeitpunkten der einzelnen Messungen und ob die jeweilige Messung zu einem Zeitpunkt erfolgte, zu dem Leuchtmittel aktiv war (Einschaltphase) oder während einer Aussschaltphase des Leuchtmittels 2.

Das Auswertemittel 6 ermittelt entsprechend dem erfindungsgemäßen Verfahren ausgehend von einer ermittelten Lichtstärke zu mindestens einem ersten Zeitpunkt, zu dem das Leuchtmittel 2 kein Licht abgibt unter Berücksichtigung mindestens einer gemessenen Lichtstärke zu mindestens einem zweiten Zeitpunkt, zu dem das Leuchtmittel 2 in einer Einschaltphase Licht abgibt, eine Veränderung eines Objektes im Raum. Insbesondere erkennt das Auswertemittel 6, ob sich eine Person in dem Raum 1 befindet. Entscheidet das Auswertemittel 6, dass sich eine Person im Raum 1 aufhält, so kann das Auswertemittel 6 beispielsweise ein entsprechendes Stellsignal 55 an das Steuermittel 3 übermitteln. Dieses Stellsignal kann beispielsweise das Steuermittel 3 anweisen, die Leuchtmittel 2.1, 2.2 mit einem entsprechenden Ansteuersignal zur Abgabe von Licht mit einer bestimmten Intensität zu anzusteuern.

Das Ansteuersignal für die Leuchtmittel 2.1, 2.2 kann die entsprechende Lichtabgabe beispielsweise durch ein geeignetes Tastverhältnis eines PWM-Signals einstellen.

Anhand von Fig. 5 wird nun das erfindungsgemäße Verfahren zur Ermittlung einer Veränderung in einem Raum 1 in einem Beleuchtungssystem erläutert.

Zunächst wird in einem ersten Schritt S1 des erfindungsgemäßen Verfahrens durch das Messmittels 4 eine Lichtstärke des einfallenden Lichts zu mindestens einem ersten Zeitpunkt gemessen zu dem die Leuchtmittel 2.1, 2.2 kein Licht abgeben. Für eine LED als Leuchtmittel 2.1, 2.2, die über ein PWM-Verfahren angesteuert werden, wird die erste Messung jeweils während einer Ausschaltphase der Leuchtmittel 2.1, 2.2 vorgenommen. Die gemessene Lichtstärke ist dementsprechend eine durch das Umgebungslicht verursachte Lichtstärke.

In einem zweiten Schritt S2 wird eine Lichtstärke zu mindestens einem zweiten Zeitpunkt, zu dem die Leuchtmittel 2.1, 2.2 Licht abgeben, ermittelt. Dieser mindestens ein zweite Zeitpunkt ist im Fall einer LED als Leuchtmittel 2.1, 2.2, die über ein PWM-Verfahren angesteuert werden, ist die zweite Messung jeweils eine während einer Einschaltphase der Leuchtmittel 2.1, 2.2 vorgenommene zweite Messung. Die gemessene Lichtstärke der zweiten Messung ist dementsprechend eine Lichtstärke, die durch das auch während der Ausschaltphase messbare Umgebungslicht als auch die durch reflektiertes Licht des Leuchtmittels 2 messbare Lichtstärke.

Anschließend wird nun entsprechend der Erfindung in einem Auswertungsschritt S3 ausgehend von der ermittelten Lichtstärke zu dem mindestens einem ersten Zeitpunkt und der Lichtstärke zu dem mindestens einen zweiten Zeitpunkt, anhand der Änderung des reflektierten Lichts eine Veränderung eines Objektes 12, 13 im Raum 1 erkannt. Dabei ermöglicht die im Schritt S1 erfolgte Messung eine Veränderung unabhängig von einer Verwendung des Umgebungslichts zu erkennen, diese Schritt S1 stellt also eine zeitnahe Referenz für die Bestimmung einer Veränderung des reflektierten Lichts im Raum 1 dar. Das

Auswertemittel 6 kann ausgehend von dieser erkannten Veränderung des reflektierten Lichts beispielsweise eine Klassifizierung vornehmen. Das Ergebnis dieser Klassifizierung kann beispielsweise die Entscheidung sein, das sich mindestens eine Person im Raum aufhält. Das Auswertemittel 6 ist vorzugsweise so ausgelegt, dass es eine Veränderung der Position einer Person von einer Veränderung einer grundlegenden Lichtsituation unterscheiden kann. Diese Unterscheidung ist beispielsweise durch Trainieren des Auswertemittels 6 zu lernen.

Eine solche Unterscheidung kann in einer Ausführung der Erfindung in einem neuronalen Netz implementiert werden. Grundlegende und dem Fachmann an sich bekannte Verfahren der Mustererkennung und der Statistik können in dem Auswertemittel 6 dazu herangezogen werden, eine Entscheidung über eine Veränderung eines Objekte im Raum aus den gemessenen Werten der Lichtstärke (Lichtintensität) zu treffen.

Beispielsweise können längere Zeitintervalle, in denen Personen im Raum keine oder nur geringfügige Bewegungen ausführen, in einer Ausführung des Verfahrens mittels Berücksichtigung eines Zeitablaufs der erkannten Änderungen der Lichtintensität und trainierte zeitliche Muster in der Änderung der Lichtintensität erkannt werden.

Eine Änderung des Reflexionseigenschaften des Raums 1 ist in einer Ausführung über einen Bezug der ermittelten Lichtpegels während einer Aktivierungsphase des Leuchtmittels 2 im Vergleich zu dem ermittelten Lichtpegel während der Ausschaltzeitdauern des Leuchtmittels 2 unabhängig von einer Umgebungslichtstärke zu erhalten.

Ein Vorteil der Erfindung beruht darüber hinaus darin, dass auf einfache Weise im Auswerteschritt S3 eine anteilige Lichtstärke berücksichtigt werden kann, die im ersten Schritt des Messens S1 für weitere im Raum befindliche künstliche Leuchtmittel mit definierter Betriebsfrequenz, insbesondere weitere Leuchtmittel die entsprechend dem PWM-Verfahren angesteuert werden, ermittelt wurde.

In einer besonders vorteilhaften Ausführungsform der erfindungsgemäßen Verfahrens ist die Leuchte so ausgebildet, dass sie in mindestens zwei unterschiedlichen Spektren Licht emittieren kann. Eine solche Ausbildung ist besonders einfach für Leuchtmittel 2.1, 2.2, 2.3,... zu erreichen, die als LEDs oder LED-Module aufgebaut sind. Eine solche Leuchte 2 ist ein Vielfachkanal-LED Modul, das mindestens zwei LEDs für jeweils ein unterschiedliches Teilspektrum des gesamten durch das Vielfachkanal-LED-Modul abgedeckte Lichtemissionsspektrum ausgelegt ist. Bei einer geeigneten entsprechenden Auslegung des Steuermittels 3, des Messmittels 4 und des Auswertemittels 6 ist die Reflexionsmessung als eine von dem Spektrum des ermittelten Lichtintensität abhängige Lichtstärkemessung auszuführen. Eine entsprechende Auswertung in Schritt S3 ermöglicht eine noch feinere Abstufung der Erkennung einer Veränderung eines Objektes mit einer erhöhten Zuverlässigkeit verglichen mit einer Auswertung über ein gleich breites Gesamtspektrum, da die Reflexionseigenschaften des Raumes eine spektrale Abhängigkeit aufweisen.

Im vorstehend geschilderten Ausführungsbeispiel ist eine Ausführung des erfindungsgemäßen Systems zum Erkennen einer Änderung anhand eines Beleuchtungssystems für einen Raum dargestellt. Die Erfindung ist aber ebenso außerhalb eines Raums 1 in einem Fahrzeug oder im Freien anwendbar.

Die Erfindung wurde vorstehend unter Bezug auf besonders vorteilhaften Ausführungsformen beschrieben. Die Beschreibung der Ausführungsformen erfolgt dabei nicht abschließend. Insbesondere die Kombination von Merkmalen unterschiedlicher und getrennt beschriebener Ausführungsbeispiele ist ebenso möglich wie vorteilhaft, und im Rahmen des Schutzumfangs der beiliegenden Patentansprüche ausdrücklich umfasst.

## Patentansprüche

1. System zur Ermittlung einer Veränderung in einem Raum, das System umfassend
Leuchtmittel (2), geeignet Licht abzugeben;
Steuerungsmittel, (3) geeignet die Lichtabgabe des Leuchtmittels (2) zu steuern;
Messmittel (4) geeignet eine Lichtstärke zu ermitteln,
ein Auswertemittel (6), geeignet dafür, die ermittelte Lichtstärke auszuwerten und ein Schaltsignal für die Steuerungsmittel (3) beruhend auf der Auswertung der Lichtstärke zu erzeugen; und
dass das Auswertemittel (6) ausgelegt ist, ausgehend von einer ermittelten Lichtstärke, die eine Referenz für die Bestimmung der Änderung der Reflexionsverhältnisse in dem von dem Leuchtmittel (2) beleuchteten Raum bildet, zu mindestens einem ersten Zeitpunkt, zu dem das Leuchtmittel (2) kein Licht abgibt und einer Lichtstärke zu mindestens einem zweiten Zeitpunkt, zu dem das Leuchtmittel (2) Licht abgibt, eine Veränderung eines Objektes im Raum zu erkennen, sodass die Bestimmung der Veränderung des Objektes in dem Raum durch Detektion einer Veränderung der Reflexionsverhältnisse in dem Raum mittels der ermittelten Lichtstärke zu dem mindestens einem zweiten Zeitpunkt erfolgt, wobei
das System Bestandteil eines Beleuchtungssystems ist und dass das Messmittel (4) dem Leuchtmittel (2) zugeordnet und innerhalb eines oder am Gehäuse des Leuchtmittels angeordnet ist, wobei
das Messmittel (4) einen Tageslichtsensor umfasst; und das System ist **dadurch gekennzeichnet,**
**dass** das Steuerungsmittel (3) eingerichtet ist, einen Burstbetrieb des Leuchtmittels (2) zu starten, wenn der Tageslichtsensor eine Lichtstärke unterhalb einer Tageslichtschwelle ermittelt und die Leuchtmittel inaktiv geschaltet sind, um während dieses Burstbetriebes die Reflexionseigenschaften des Raumes in regelmäßigen Abständen zu überprüfen.

2. System nach Anspruch 1,
wobei das Messmittel (4) einen Fotosensor umfasst.

3. System nach einem der Ansprüche 1 bis 2,
wobei das Steuerungsmittel (3) ausgelegt ist, das Messmittel (4) zu steuern,
wobei das Steuerungsmittel (3) ausgelegt ist, in Abhängigkeit von der erkannten Veränderung des Objektes einen Lichtpegel des abgegebenen Lichts zu ändern.

4. System nach einem der Ansprüche 1 bis 3,
wobei das Auswertemittel (6) ausgelegt ist, aus einem Verhältnis der ermittelten Lichtstärke zu dem ersten Zeitpunkt, und einer Lichtstärke zu dem zweiten Zeitpunkt, eine Änderung eines von dem Objekt reflektierten Lichtanteils zu bestimmen, um eine Anwesenheit einer Person in dem Raum zu ermitteln.

5. System nach einem der Ansprüche 1 bis 4,
wobei das Auswertemittel (3) ausgelegt ist, mittels Lernen aus der ermittelten Lichtstärke zu dem mindestens einen ersten Zeitpunkt, und einer Lichtstärke zu dem mindestens einen zweiten Zeitpunkt, eine Anwesenheit einer Person in dem Raum zu entscheiden.

6. System nach der Ansprüche 5,
wobei das Auswertemittel (3) ausgelegt ist, das Lernen auf Grundlage eines neuronalen Netzes auszuführen.

7. System nach einem der Ansprüche 1 bis 6,
wobei Licht zu dem mindestens einen ersten Zeitpunkt Umgebungslicht umfasst, und das Licht zu dem mindestens einen zweiten Zeitpunkt aus Umgebungslicht und reflektiertem Licht besteht.

8. System nach einem der Ansprüche 1 bis 7,
wobei das Auswertemittel (3) eingerichtet ist, aus einer ermittelten Lichtstärke zu dem mindestens einen zweiten Zeitpunkt, ein Anteil des ermittelten Lichts der durch weitere Leuchtmittel mit definierter Betriebsfrequenz in dem Raum erzeugt wird, zu bestimmen.

9. System nach einem der Ansprüche 1 bis 8,
wobei
das Leuchtmittel (3) mindestens ein Leuchtelement und mindestens ein weiteres Leuchtelement umfasst, wobei das mindestens eine Leuchtelement und das mindestens eine weitere Leuchtelement ausgelegt sind, jeweils Licht in einem voneinander unterscheidbaren Spektrum aussenden, und
das Auswertemittel (6) eingerichtet ist, jeweils die ermittelte Lichtstärke in den voneinander unterscheidbaren Spektren auszuwerten, um die Veränderung des Objektes zu erkennen.

10. Verfahren zur Ermittlung einer Veränderung in einem Raum mit einem System, das System umfassend
Leuchtmittel (2), die Licht abgeben;
Steuerungsmittel (3), die die Lichtabgabe des Leuchtmittels (2) steuern;
Messmittel (4) die eine Lichtstärke ermitteln; und
Auswertemittel (5), die die ermittelte Lichtstärke auswerten und ein Schaltsignal für die Steuereinrichtung (3) beruhend auf der Auswertung der Lichtstärke erzeugen; und wobei das Verfahren **dadurch gekennzeichnet ist,**
**dass** in einem Schritt eine Lichtstärke, die eine Referenz für die Bestimmung der Änderung der Reflexionsverhältnisse in dem von dem Leuchtmittel (2) beleuchteten Raum bildet, zu mindestens einem ersten Zeitpunkt ermittelt wird, zu dem das Leuchtmittel (2) kein Licht abgibt;
in einem weiteren Schritt eine Lichtstärke zu mindestens einem zweiten Zeitpunkt, zu dem das Leuchtmittel Licht abgibt ermittelt wird; und
in einem Schritt des Auswertens ausgehend von der ermittelte Lichtstärke zu dem mindestens einen ersten Zeitpunkt und der Lichtstärke zu dem mindestens einen zweiten Zeitpunkt, eine Veränderung eines Objektes im Raum erkannt wird, sodass die Bestimmung der Veränderung des Objektes in dem Raum durch Detektion einer Veränderung der Reflexionsverhältnisse in dem Raum mittels der ermittelten Lichtstärke zu dem mindestens einem zweiten Zeitpunkt erfolgt,
wobei das System Bestandteil eines
Beleuchtungssystems ist und wobei das Messmittel (4) dem Leuchtmittel (2) zugeordnet und innerhalb eines oder am Gehäuse des Leuchtmittels angeordnet ist, wobei dass das Messmittel (4) einen Tageslichtsensor umfasst; und
das Verfahren ist **dadurch gekennzeichnet, dass** das Steuerungsmittel (3) eingerichtet ist, einen Burstbetrieb des Leuchtmittels (2) zu starten, wenn der Tageslichtsensor eine Lichtstärke unterhalb einer Tageslichtschwelle ermittelt und die Leuchtmittel inaktiv geschaltet sind, um während dieses Burstbetriebes die Reflexionseigenschaften des Raumes in regelmäßigen Abständen zu überprüfen.

11. Computerprogramm mit Programmcode-Mitteln, um alle Schritte gemäß Anspruch 10 durchführen zu können, wenn das Programm auf einem Computer oder einem digitalen Signalprozessor ausgeführt wird.

12. Computerprogramm-Produkt mit auf einem maschinenlesbaren Datenträger gespeicherten Programmcode-Mitteln, um alle Schritte gemäß Anspruch 10 durchführen zu können, wenn das Programm auf einem Computer oder einem digitalen Signalprozessor ausgeführt wird.

## Claims

1. System for determining a change in a room, the system comprising
illuminants (2), suitable for emitting light;
control means (3), suitable for controlling the light emission of the illuminant (2);
measuring means (4), suitable for determining a light intensity,
an evaluation means (6) suitable for evaluating the determined light intensity and for generating a switching signal for the control means (3) based on the evaluation of the light intensity; and
the evaluation means (6) being designed, starting from a determined light intensity which forms a reference for the determination of the change in the reflection conditions in the room illuminated by the illuminant (2), to detect a change of an object in the room at least at a first point in time at which the illuminant (2) does not emit any light, and a light intensity at least at a second point in time at which the illuminant (2) does emit light, so that the change in the object in the room is determined by detecting a change in the reflection conditions in the room by means of the determined light intensity at the at least one second point in time,
the system being a component of an illumination system and the measuring means (4) being assigned to the illuminant (2) and arranged within or on a housing of the illuminant,
the measuring means (4) comprising a daylight sensor; and the system being **characterized**
**in that** the control means (3) is configured to start a burst operation of the illuminant (2) when the daylight sensor determines a light intensity below a daylight threshold, and the illuminants are switched to inactive in order to check the reflection properties of the room at regular intervals during said burst operation.

2. System according to claim 1,
wherein the measuring means (4) comprises a photo sensor.

3. System according to either of claims 1 and 2,
wherein the control means (3) is designed to control the measuring means (4),
wherein the control means (3) is designed to change a light level of the emitted light as a function of the detected change in the object.

4. System according to any of claims 1 to 3,
wherein the evaluation means (6) is designed to determine, from a condition of the determined light intensity at the first point in time and a light intensity at the second point in time, a change in a light proportion reflected by the object, in order to determine a presence of a person in the room.

5. System according to any of claims 1 to 4,
wherein the evaluation means (3) is designed to decide a presence of a person in the room by learning from the determined light intensity at the at least one first point in time and a light intensity at the at least one second point in time.

6. System according to claim 5,
wherein the evaluation means (3) is designed to learn based on a neural network.

7. System according to any of claims 1 to 6,
wherein, at the at least one first point in time, light comprises ambient light, and the light at the at least one second point in time consists of ambient light and reflected light.

8. System according to any of claims 1 to 7,
wherein the evaluation means (3) is designed to determine, from a determined light intensity at the at least one second point in time, a proportion of the determined light which is generated by further illuminants having a defined operating frequency in the room.

9. System according to any of claims 1 to 8,
wherein the illuminant (3) comprises at least one illuminating element and at least one further illuminating element, wherein the at least one illuminating element and the at least one further illuminating element are each designed to radiate light in a distinguishable spectrum, and
the evaluation means (6) is designed to evaluate the determined light intensity in each of the distinguishable spectra in order to detect the change in the object.

10. Method for determining a change in a room using a system, the system comprising
illuminants (2) that emit light;
control means (3) which control the light emission of the illuminant (2);
measuring means (4) which determine a light intensity; and
evaluation means (5) which evaluate the determined light intensity and generate a switching signal for the control unit (3) based on the evaluation of the light intensity, and the method being **characterized in**
**that** in one step, a light intensity which forms a reference for the determination of the change in the reflection conditions in the room illuminated by the illuminant (2) is determined at least at a first point in time at which the illuminant (2) does not emit light;
in a further step, a light intensity at least at a second point in time at which the illuminant emits light is determined; and
in a step of evaluation, starting from the determined light intensity at the at least one first point in time and the light intensity at the at least one second point in time, a change in an object in the room is detected, such that the change in the object in the room is determined by detecting a change in the reflection conditions in the room by means of the determined light intensity at the at least one second point in time,
the system being a component of an illumination system and the measuring means (4) being assigned to the illuminant (2) and arranged within or on a housing of the illuminant, the measuring means (4) comprising a daylight sensor; and
the method being **characterized**
**in that** the control means (3) is configured to start a burst operation of the illuminant (2) when the daylight sensor determines a light intensity below a daylight threshold, and the illuminants are switched to inactive in order to check the reflection properties of the room at regular intervals during said burst operation.

11. Computer program comprising program code means for performing all the steps according to claim 10 when the program is executed on a computer or a digital signal processor.

12. Computer program product comprising program code means stored on a machine-readable data carrier for performing all the steps according to claim 10 when the program is executed on a computer or a digital signal processor.

## Revendications

1. Système permettant de déterminer une modification dans une pièce, le système comprenant
des moyens d'éclairage (2) adaptés pour émettre de la lumière ;
des moyens de commande (3) adaptés pour commander l'émission de lumière du moyen d'éclairage (2) ;
des moyens de mesure (4) adaptés pour déterminer une intensité de lumière ;
un moyen d'évaluation (6) adapté pour évaluer l'intensité de lumière déterminée et pour générer, sur la base de l'évaluation de l'intensité de lumière, un signal de commutation destiné aux moyens de commande (3) ; et
en ce que le moyen d'évaluation (6) est configuré pour détecter une modification d'un objet dans la pièce sur la base d'une intensité de lumière déterminée, laquelle constitue une référence pour la définition de la modification des rapports de réflexion dans la pièce éclairée par le moyen d'éclairage (2), à au moins un premier moment où le moyen d'éclairage (2) n'émet aucune lumière, et sur la base d'une intensité de lumière à au moins un second moment où le moyen d'éclairage (2) émet de la lumière, de sorte que la définition de la modification de l'objet dans la pièce s'effectue par la détection d'une modification des rapports de réflexion dans la pièce à l'aide de l'intensité de lumière déterminée à l'au moins un second moment,
le système faisant partie intégrante d'un système d'éclairage
et en ce que le moyen de mesure (4) est associé au moyen d'éclairage (2) et disposé à l'intérieur d'un moyen d'éclairage ou sur le boîtier de celui-ci,
le moyen de mesure (4) comprenant un capteur de lumière naturelle ; et le système étant **caractérisé en ce**
**que** le moyen de commande (3) est configuré pour lancer un fonctionnement en rafale du moyen d'éclairage (2) lorsque le capteur de lumière naturelle détermine une intensité de lumière inférieure à un seuil de lumière naturelle et que les moyens d'éclairage sont commutés dans un état inactif afin de vérifier les propriétés de réflexion de la pièce à des intervalles réguliers pendant ledit fonctionnement en rafale.

2. Système selon la revendication 1,
dans lequel le moyen de mesure (4) comprend un photocapteur.

3. Système selon l'une des revendications 1 à 2,
dans lequel le moyen de commande (3) est configuré pour commander le moyen de mesure (4),
dans lequel le moyen de commande (3) est configuré pour modifier un niveau de lumière de la lumière émise en fonction de la modification détectée de l'objet.

4. Système selon l'une des revendications 1 à 3,
dans lequel le moyen d'évaluation (6) est configuré pour définir, à partir d'un rapport de l'intensité de lumière déterminée au premier moment à une intensité de lumière au second moment, un changement d'une proportion de lumière réfléchie par l'objet afin de déterminer la présence d'une personne dans la pièce.

5. Système selon l'une des revendications 1 à 4,
dans lequel le moyen d'évaluation (3) est configuré pour déterminer la présence d'une personne dans la pièce à l'aide d'un apprentissage à partir de l'intensité de lumière déterminée à l'au moins un premier moment et d'une intensité de lumière à l'au moins un second moment.

6. Système selon la revendication 5,
dans lequel le moyen d'évaluation (3) est configuré pour exécuter l'apprentissage sur la base d'un réseau neuronal.

7. Système selon l'une des revendications 1 à 6,
dans lequel la lumière comprend de la lumière ambiante à l'au moins un premier moment, et la lumière est composée, à l'au moins un second moment, de la lumière ambiante et de la lumière réfléchie.

8. Système selon l'une des revendications 1 à 7,
dans lequel le moyen d'évaluation (3) est configuré pour définir, à partir d'une intensité de lumière déterminée à l'au moins un second moment, une proportion de la lumière déterminée, laquelle proportion est générée par des moyens d'éclairage supplémentaires à une fréquence de fonctionnement définie dans la pièce.

9. Système selon l'une des revendications 1 à 8,
dans lequel le moyen d'éclairage (3) comprend au moins un élément d'éclairage et au moins un élément d'éclairage supplémentaire, l'au moins un élément d'éclairage et l'au moins un élément d'éclairage supplémentaire étant conçus pour émettre respectivement de la lumière dans des spectres pouvant être différenciés l'un de l'autre, et
le moyen d'évaluation (6) étant configuré pour évaluer respectivement l'intensité de lumière déterminée dans les spectres pouvant être différenciés l'un de l'autre afin de détecter la modification de l'objet.

10. Procédé permettant de déterminer une modification dans une pièce au moyen d'un système, le système comprenant
des moyens d'éclairage (2) qui émettent de la lumière ;
des moyens de commande (3) qui commandent l'émission de lumière du moyen d'éclairage (2) ;
des moyens de mesure (4) qui déterminent une intensité de lumière ; et
des moyens d'évaluation (5) qui évaluent l'intensité de lumière déterminée et génèrent un signal de commutation pour le dispositif de commande (3) sur la base de l'évaluation de l'intensité de lumière ; et le procédé étant **caractérisé en ce**
**que**, dans une étape, une intensité de lumière qui constitue une référence pour la définition de la modification des rapports de réflexion dans la pièce éclairée par le moyen d'éclairage (2) est déterminée à au moins un premier moment où le moyen d'éclairage (2) n'émet aucune lumière ;
dans une étape supplémentaire, une intensité de lumière est déterminée à au moins un second moment où le moyen d'éclairage émet de la lumière ; et
dans une étape de l'évaluation, sur la base de l'intensité de lumière déterminée à l'au moins un premier moment et de l'intensité de lumière à l'au moins un second moment, une modification d'un objet dans la pièce est détectée, de sorte que la définition de la modification de l'objet dans la pièce s'effectue par la détection d'une modification des rapports de réflexion dans la pièce à l'aide de l'intensité de lumière déterminée à l'au moins un second moment,
le système faisant partie intégrante d'un système d'éclairage et le moyen de mesure (4) étant associé au moyen d'éclairage (2) et disposé à l'intérieur d'un moyen d'éclairage ou sur le boîtier de celui-ci, en ce que le moyen de mesure (4) comprenant un capteur de lumière naturelle ; et
le procédé étant **caractérisé en ce**
**que** le moyen de commande (3) est configuré pour lancer un fonctionnement en rafale du moyen d'éclairage (2) lorsque le capteur de lumière naturelle détermine une intensité de lumière inférieure à un seuil de lumière naturelle et que les moyens d'éclairage sont commutés dans un état inactif afin de vérifier les propriétés de réflexion de la pièce à des intervalles réguliers pendant ledit fonctionnement en rafale.

11. Programme informatique comportant des moyens de code de programme, permettant de réaliser toutes les étapes selon la revendication 10 lorsque le programme est exécuté sur un ordinateur ou un processeur de signal numérique.

12. Produit programme informatique comportant des moyens de code de programme mémorisés sur un support de données lisible par machine, permettant de réaliser toutes les étapes selon la revendication 10 lorsque le programme est exécuté sur un ordinateur ou un processeur de signal numérique.
